# EUROPÄISCHE PATENTSCHRIFT

(11) **EP 0 823 649 B1**
(45) Veröffentlichungstag und Bekanntmachung des Hinweises auf die Patenterteilung: **26.03.2003**
(21) Anmeldenummer: 97810468.5
(22) Anmeldetag: 11.07.1997
(51) Int. Cl.: G02B 6/38

(54) **Steckerteil für eine optische Steckverbindung**
Connector part for optical connection
Elément de connecteur pour connexion optique

(30) Priorität: 08.08.1996 CH 194896
(43) Veröffentlichungstag der Anmeldung: 11.02.1998
(73) Patentinhaber: DIAMOND S.A., CH-6616 Losone-Locarno (CH)
(72) Erfinder: de Marchi, Silverio, 6612 Ascona (CH)
(74) Vertreter: Wenger, René

(56) Entgegenhaltungen:
- EP-A- 0 570 652
- EP-A- 0 599 784

## Beschreibung

Die Erfindung betrifft ein Steckerteil für eine optische Steckverbindung gemäss dem Oberbegriff von Anspruch 1. Derartige Steckerteile zeichnen sich dadurch aus, dass der empfindliche Steckerstift im ausgesteckten Zustand stets durch die Schutzklappe geschützt ist, wobei die Schutzklappe erst beim Einsteckvorgang durch Zusammenwirken mit einem entsprechenden Buchsenteil geöffnet wird. Aus Platzgründen genügt es dabei nicht, dass die Schutzklappe lediglich aufgeschwenkt wird, sondern sie muss nach dem Erreichen der maximalen Schwenkbewegung auch noch relativ zur Stirnseite des Steckergehäuses zurückgezogen werden.

Ein Steckerteil der gattungsgemässen Art ist durch die EP-A-570 652 bekannt geworden. Da die Schutzklappe im ausgesteckten Zustand die Stirnseite des Steckergehäuses zuverlässig verschliessen muss, war es auch bereits bekannt, die Schutzklappe unter Federvorspannung in die Schliessposition vorzuspannen. Diese Federvorspannung wurde mit einem Federnocken an der Schutzklappe erzeugt, der sich gegen die Stirnseite des Steckergehäuses presst und dessen Federkraft beim Aufschwenken des Schutzdeckels überwunden werden muss. Ein Nachteil dieser Lösung besteht darin, dass der Federnocken nur etwa bis zu einem Schwenkwinkel von 30 bis 45° wirksam ist. Anschliessend überfährt der Federnocken einen Totpunkt nach dem die Schutzklappe nicht mehr vorgespannt ist. Insbesondere auf dem gesamten etwa linearen Schiebeweg der Schutzklappe nach dem Erreichen der vollen Schwenkbewegung steht die Schutzklappe nicht mehr unter Schliessvorspannung. Wird nun ein Steckerteil unsachgemäss aus einem Buchsenteil herausgezogen oder wird im ausgesteckten Zustand an der Schutzklappe manipuliert, so kann diese in einer geöffneten Position stehen bleiben.

Es ist daher eine Aufgabe der Erfindung, ein Steckerteil der eingangs genannten Art zu schaffen, dessen Schutzklappe nicht nur im Bereich der Schwenkbewegung, sondern auch im gesamten Bereich der Schiebebewegung in die Schliessstellung vorgespannt ist. Diese Aufgabe wird erfindungsgemäss mit einem Steckerteil gelöst, das die Merkmale im Anspruch 1 aufweist. Die etwa parallel zur Führungsbahn angeordnete Druckfeder ermöglicht es, die Schutzklappe auf ihrem gesamten Weg, insbesondere auf ihrem etwa linearen Schiebeweg zu beaufschlagen. Da die Druckfeder über der Ebene der Führungsbahn an der Schutzklappe angreift, wird gleichzeitig eine Hebelwirkung auf die Schutzklappe ausgeübt, welche die Federvorspannung auch noch über den gesamten Schwenkbereich überträgt. Damit wird auf einfache Weise das Problem gelöst, die Federvorspannung über einen kombinierten Bewegungsablauf aufzubringen.

Besonders vorteilhaft ist die Druckfeder in einer Nut und/oder in einem Hohlkanal am Steckergehäuse gelagert, wobei sie über einen in der Nut und/oder im Hohlkanal geführten Stössel an der Schutzklappe angreift. Der Stössel ermöglicht eine einwandfreie Übertragung der Federkraft, insbesondere auf dem Wegabschnitt, auf dem die Schutzklappe eine Kurvenbahn fährt. Die Schutzklappe kann dabei einen Hebelarm aufweisen, dessen freies Ende in jeder Position der Schutzklappe über der Ebene der Führungsbahn mit einer Stirnseite des Stössels zusammenwirkt. Das freie Ende des Hebelarms kann sich dabei auf der Stirnseite abrollen und/oder es sind auch Relativbewegungen zwischen Hebelarm und Stirnseite möglich.

Vorzugsweise ist der Stössel als etwa U-förmiger Bügel ausgebildet, wobei die Druckfeder zwischen den Schenkeln des Bügels gelagert ist. Damit wird einerseits eine gute Führung des Stössels erreicht und anderseits kann der Stössel die Druckfeder vor äusseren Einwirkungen schützen, wenn diese in einer offenen Nut gelagert ist.

Die eingangs erwähnten bekannten Steckerteile weisen am Schutzdeckel ein Paar seitliche Gelenknocken auf, welche in ein Paar parallele Führungsnuten am Steckergehäuse eingreifen. Damit wird ein Verkanten der Schutzklappe verhindert. Eine besonders platzsparende und vorteilhafte Anordnung ergibt sich dabei, wenn die Druckfeder zwischen den beiden Führungsnuten gelagert ist. Die Druckfeder ist dabei relativ geschützt untergebracht und sie beaufschlagt die Schutzklappe auf einer Ebene zwischen den beiden Gelenknocken, so dass kein Verkanten möglich ist.

Die bekannten Steckerteile sind ausserdem im Anschluss an die Führungsnuten mit einer Sperrleiste versehen, an der eine buchsenseitige Sperrklinke einrastbar ist. Zum Lösen der Sperrklinke ist am Steckergehäuse ein Entriegelungshebel schwenkbar gelagert. Die Druckfeder erstreckt sich vorzugsweise im wesentlichen über die gesamte Länge des Steckergehäuses durch die Sperrleiste hindurch bis unter den Entriegelungshebel. Durch die volle Ausnützung der Baulänge des Steckergehäuses kann eine Druckfeder mit einer vorteilhaften Federcharakteristik gewählt werden. Im Bereich der Sperrleiste kann die Druckfeder einen Hohlkanal durchlaufen, welcher gleichzeitig als Lagesicherung für die Druckfeder dient. Unter dem Entriegelungshebel ist die Druckfeder von aussen nicht sichtbar und geschützt.

Vorzugsweise handelt es sich bei der Druckfeder um eine Schraubendruckfeder. Als Widerlager dient dabei ein am Stekkergehäuse angeordneter Dorn, der in die Druckfeder eingreift.

Ein Ausführungsbeispiel der Erfindung ist in den Zeichnungen dargestellt und wird nachstehend genauer beschrieben. Es zeigen:
- Figur 1: eine Steckverbindung in perspektivischer Darstellung bestehend aus einem Buchsenteil und zwei Steckerteilen,
- Figur 2: eine perspektivische Darstellung eines Stekkerteils mit den wesentlichen Bauteilen vor der Montage,
- Figur 3: einen Querschnitt durch das Steckerteil gemäss Figur 2 im ausgesteckten Zustand, und
- Figur 4: einen Querschnitt durch das Steckerteil gemäss Figur 2 im eingesteckten Zustand.

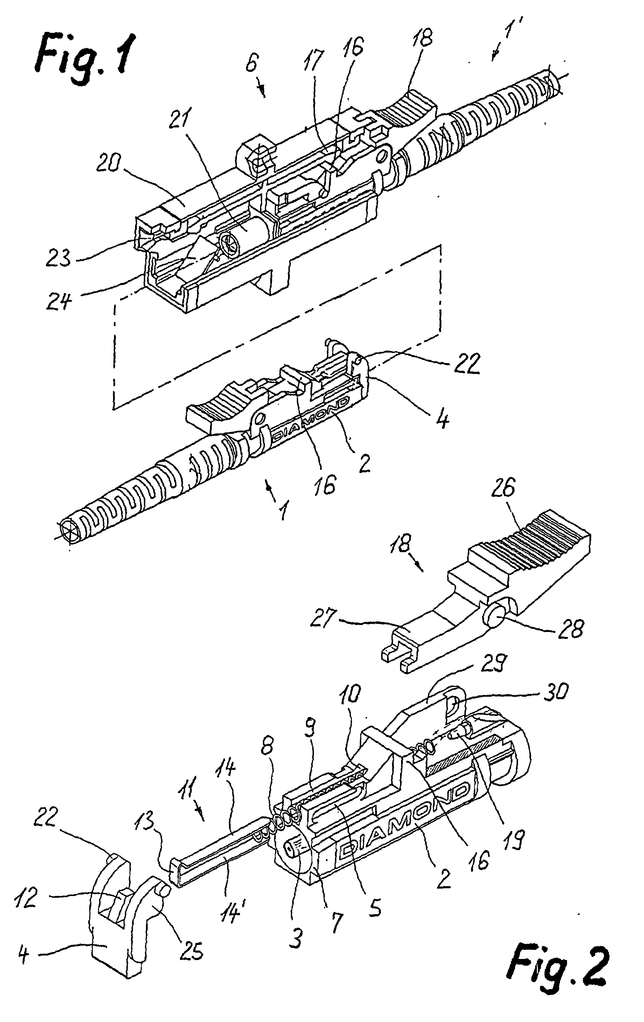

Anhand von Figur 1 wird zunächst der prinzipielle Aufbau einer gattungsmässigen Steckverbindung erläutert. In einem in Figur 1 teilweise offen dargestelltes Buchsenteil 6 können von beiden Seiten her die beiden Steckerteile 1 und 1' eingesteckt werden. Jedes Steckerteil verfügt über ein Steckergehäuse 2, in dem wenigstens ein Steckerstift 3 (Figur 2) gehalten ist. Zum Schutz der Stirnseite des Steckerstifts ist am Steckergehäuse eine Schutzklappe 4 schwenkbar und verschiebbar gelagert. Am Steckergehäuse ist ausserdem noch ein Entriegelungshebel 18 gelagert und es ist mit einer Sperrleiste 16 versehen.

Das Buchsenteil 6 verfügt über ein Buchsengehäuse 20, in welchem die eigentliche Steckerbuchse 21 gehalten ist. Auf jeder Steckerseite ist im Buchsengehäuse eine Sperrklinke 17 angeordnet, die bei ganz eingestecktem Steckerteil hinter der Sperrleiste 16 einrastet und das Steckerteil auf diese Weise sichert. Zum Lösen der Verriegelung muss der Entriegelungshebel 18 betätigt werden, wobei die Sperrklinke 17 angehoben wird. Bei ausgestecktem Stecker wird die Öffnung der Buchse 21 durch eine Blende 24 verdeckt, so dass kein Licht austreten kann.

Beim Einstecken eines Steckerteils in das Buchsenteil wirken die Steuernocken 22 an der Schutzklappe 4 mit einer korrespondierenden Steuerbahn 23 am Buchsenteil 6 zusammen. Die Steuerbahn 23 verläuft derart, dass die Steuernocken 22 zunächst nach unten gedrückt werden, so dass die Schutzklappe 4 aufschwenkt. Anschliessend erreichen die Steuernocken 22 eine Anschlagstellung in der Steuerbahn 23, so dass die geöffnete Schutzklappe relativ zum Buchsengehäuse 20 stehen bleibt, während das Steckergehäuse 2 weitergeschoben wird, bis die Sperrklinke 17 einrastet. Relativ zum Steckergehäuse wird dabei die Schutzklappe 4 ersichtlicherweise hinter die Ebene der Stirnseite des Steckergehäuses zurückgezogen. Der Steckerstift dringt jetzt in die Buchse 21 ein und steht dort exakt ausgerichtet einem benachbarten Steckerstift gegenüber. Diese eingesteckte Position mit zurückgezogener Schutzklappe ist in Figur 1 auf der rechten Seite des Buchsenteils dargestellt. Für weitere Einzelheiten wird auf die EP-A-570 652 verwiesen.

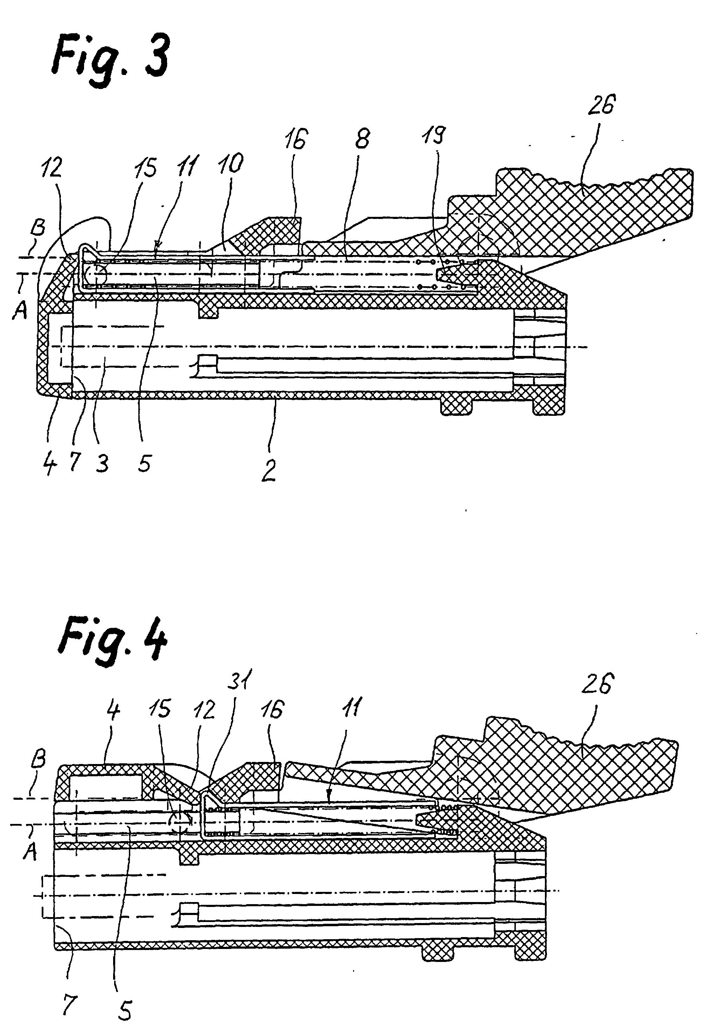

Figur 2 zeigt ein Steckerteil (ohne Knickschutz) mit den Bauteilen, welche der Vorspannung der Schutzklappe 4 dienen. Die Schutzklappe verfügt über Seitenflügel 25, an denen die Steuernocken 22 nach aussen weisend angeordnet sind. Zwischen den Seitenflügeln 25 erstreckt sich etwas schräg zurück geneigt ein Hebelarm 12. Auf der Innenseite der Seitenflügel 25 sind einander zugewandt zwei Gelenknocken 15 angeordnet, die in je eine etwa lineare Führungsbahn 5 am Buchsengehäuse eingreifen. Die Gelenknocken 15 sind in Figur 2 nicht direkt sichtbar. Ihre Relativlage ist jedoch in den Figuren 3 und 4 angedeutet.

Der Entriegelungshebel 18 besteht aus einem Griffstück 26 und aus dem eigentlichen Betätigungshebel 27. Der Entriegelungshebel 18 ist mittels seitlichen Lagernocken 28 zwischen zwei Seitenwänden 29 gelagert, wobei die Lagernocken in Öffnungen 30 einrasten. Die rechte Seitenwand ist in der Darstellung zur besseren Übersicht angeschnitten.

Zwischen den beiden Führungsbahnen 5 ist am Steckergehäuse 2 eine Nut 9 ausgespart, die im Bereich der Sperrleiste 16 in einen die Sperrleiste durchdringenden Hohlkanal 10 übergeht. In der Fortsetzung dieses Hohlkanals zwischen den beiden Seitenwänden 29 ist ein Dorn 19 angeordnet.

Dieser Dorn dient als Widerlager für eine Schraubendruckfeder 8, welche in der Nut 9 bzw. im Hohlkanal 10 gelagert ist. Die Druckfeder wirkt auf einen Stössel 11, der als etwa U-förmiger Bügel ausgebildet ist. Die beiden Bügelschenkel 14 und 14' übergreifen dabei die Druckfeder, während die Stirnseite 13 des Bügels am Ende des Hebelarms 12 anliegt.

Figur 3 zeigt ein Steckerteil, bei dem die Schutzklappe 4 unter Federvorspannung gegen die Stirnseite 7 des Steckergehäuses gepresst ist. Der Stössel 11 beaufschlagt dabei das Ende des Hebelarms 12 auf einer Ebene B über der mittleren Ebene A der Führungsbahn 5 bzw. über der Drehachse der Gelenknocken 15. Auf diese Weise wird durch die Hebelwirkung ein Drehmoment erzielt, das in der Abbildung im Gegenuhrzeigersinn auf die Schutzklappe 4 wirkt.

Aus Figur 3 ist ausserdem ersichtlich, dass die Länge der beiden Bügelschenkel 14, 14' derart bemessen ist, dass sie auch bei geschlossener Schutzklappe den Hohlkanal 10 durchdringen. Die Druckfeder 8 wird dadurch im Bereich der Nut 9 nicht nur durch den Bügel verdeckt, sondern der Bügel dient auch noch als Haltesicherung für die Druckfeder. Der Stössel 11 kann somit nur entfernt werden, wenn auch die Schutzklappe 4 demontiert wird, was jedoch lediglich in der Position gemäss Figur 4 möglich ist.

Figur 4 zeigt die Schutzklappe 4 in der Position, die sie unter normalen Bedingungen nur innerhalb des Buchsenteils einnimmt. Die Schutzklappe verläuft dabei etwa parallel zum Steckerstift 3 und die Gelenknocken 15 haben das hintere Ende der Führungsbahn 5 erreicht. In dieser Position können die Gelenknocken zur Demontage der Schutzklappe nach oben ausgefahren werden.

Der Stössel 11 ist ganz zurückgefahren, wobei die Stirnseite 13 des Stössels nach wie vor am Ende des Hebelarms 12 anliegt. Der Abstand zwischen der Berührungsebene B und der Bahnebene A ist geringfügig grösser als in der Position gemäss Figur 3. Aus diesem Grund verfügt die Stirnseite 13 auch über einen etwas hochgezogenen, im Querschnitt nasenartigen Abschnitt 31.

In der in Figur 4 dargestellten Position bei eingestecktem Steckerteil bewirkt die an der Sperrleiste 16 angreifende Sperrklinke, dass der Stecker in seiner eingesteckten Position bleibt und dass somit die Schutzklappe 4 ihre Öffnungsposition beibehält. Sobald das Griffstück 26 niedergedrückt wird, wird die Sperrleiste 16 von der Sperrklinke befreit. Beim Herausziehen des Steckerteils stösst die Druckfeder 8 über den Stössel 11 die Schutzklappe 4 in ihrer Führungsbahn 5 relativ zum Steckergehäuse 2 nach vorne über die Stirnseite 7 hinaus. Da die Schutzklappe 4 an einem Mittelsteg im Buchsengehäuse ansteht, wird in Wahrheit durch die Kraft der Druckfeder das ganze Steckergehäuse aus dem Buchsenteil gestossen, so dass praktisch keine Zugkraft mehr aufgewendet werden muss. Diese Abstossbewegung erstreckt sich über die Länge der Führungsbahn 5. Die Schutzklappe nimmt dann immer noch die zum Steckerstift 3 etwa parallele Position ein, sie ragt jedoch wie am Ende der Schwenkbewegung über die Stirnseite 7 hinaus. Beim weiteren Zurückziehen des Steckerteils erreichen die Steuernocken 22 denjenigen Abschnitt der Steuerbahn 23, der das Zurückschwenken der Schutzklappe 4 einleitet. Der Stössel 11 stösst den Hebelarm 12 dann weiter nach vorne, bis die Schutzklappe wiederum die Position gemäss Figur 3 einnimmt.

## Patentansprüche

1. Steckerteil (1) für eine optische Steckverbindung mit einem Steckergehäuse (2), in dem wenigstens ein Steckerstift (3) gehalten ist, sowie mit einer Schutzklappe (4) zum Schutz der Stirnseite des Stekkerstifts, wobei die Schutzklappe an einer etwa linearen Führungsbahn (5) derart schwenkbar und verschiebbar am Steckergehäuse (2) gelagert ist, dass sie beim Einstecken des Steckerteils in ein Buchsenteil (6) aus einer Schliessposition an der Stirnseite (7) des Steckergehäuses in eine relativ zur Stirnseite zurückversetzte Öffnungsposition bewegbar ist, **dadurch gekennzeichnet, dass** sich am Stekkergehäuse (2) etwa parallel zur Führungsbahn (5) eine Druckfeder (8) erstreckt, welche die Schutzklappe (4) über der Ebene der Führungsbahn (5) zwischen der Schliessposition und der Öffnungsposition direkt oder indirekt beaufschlagt und in die Schliessposition vorspannt.

2. Steckerteil nach Anspruch 1, **dadurch gekennzeichnet, dass** die Druckfeder (8) in einer Nut (9) und/oder in einem Hohlkanal (10) am Steckergehäuse (2) gelagert ist und dass sie über einen in der Nut und/oder im Hohlkanal geführten Stössel (11) an der Schutzklappe (4) angreift.

3. Steckerteil nach Anspruch 2, **dadurch gekennzeichnet, dass** die Schutzklappe (4) einen Hebelarm (12) aufweist, dessen freies Ende in jeder Position der Schutzklappe über der Ebene der Führungsbahn mit einer Stirnseite (13) des Stössels (11) zusammenwirkt.

4. Steckerteil nach Anspruch 2 oder 3, **dadurch gekennzeichnet, dass** der Stössel (11) als etwa U-förmiger Bügel ausgebildet ist und dass die Druckfeder (8) zwischen den Schenkeln (14, 14') des Bügels gelagert ist.

5. Steckerteil nach einem der Ansprüche 1 bis 4, bei dem der Schutzdeckel (4) ein Paar seitliche Gelenknocken (15) aufweist, welche in ein Paar parallele Führungsnuten (5) am Steckergehäuse (2) eingreifen, **dadurch gekennzeichnet, dass** die Druckfeder (8) zwischen den beiden Führungsnuten gelagert ist.

6. Steckerteil nach Anspruch 5, dessen Steckergehäuse (2) im Anschluss an die Führungsnuten (5) eine Sperrleiste (16) aufweist, an der eine buchsenseitige Sperrklinke (17) einrastbar ist, sowie einen am Steckergehäuse (2) schwenkbar gelagerten Entriegelungshebel (18) zum Lösen der eingerasteten Sperrklinke, **dadurch gekennzeichnet, dass** sich die Druckfeder (8) im wesentlichen über die gesamte Länge des Steckergehäuses (2) durch die Sperrleiste (16) hindurch bis unter den Entriegelungshebel (18) erstreckt.

7. Steckerteil nach einem der Ansprüche 1 bis 6, **dadurch gekennzeichnet, dass** als Widerlager für die Druckfeder (8) ein in die Druckfeder eingreifender Dorn (19) auf dem Steckergehäuse angeordnet ist.

## Claims

1. Plug connector component (1) for an optical plug-and-socket connection having a connector housing (2) in which at least one plug pin (3) is held, and having a protective hinged cover (4) for protecting the end face of the plug pin, the protective hinged cover being mounted on the connector housing (2), on a more or less linear guideway (5) enabling it to swivel and be displaced, so that upon insertion of the plug connector component into a socket component (6) said hinged cover can be moved from a closure position on the end face (7) of the connector housing and into an opening position which is set back with respect to said end face, **characterised in that** extending along the connector housing (2), more or less parallel to the guideway (5), is a compression spring (8) which acts directly or indirectly on the protective hinged cover (4) above the plane of the guideway (5) between the closure position and the opening position, and pretensions said protective hinged cover (4) into the closure position.

2. Plug connector component according to claim 1, **characterised in that** the compression spring (8) is mounted in a slot (9) and/or a hollow channel (10) on the connector housing (2), and that it engages with the protective hinged cover (4) via a plunger (11) guided in the slot and/or the hollow channel.

3. Plug connector component according to claim 2, **characterised in that** the protective hinged cover (4) incorporates a lever arm (12), the free end of which cooperates with an end face (13) of the plunger (11) when the protective hinged cover is in any position above the plane of the guideway.

4. Plug connector component according to claim 2 or 3, **characterised in that** the plunger (11) is in the form of a substantially U-shaped bracket and that the compression spring (8) is mounted between the sidepieces (14, 14') of said bracket.

5. Plug connector according to any of claims 1 to 4, wherein the protective cover (4) incorporates a pair of lateral articulated cams (15) which engage in a pair of parallel guide slots (5) on the connector housing (2), **characterised in that** the compression spring (8) is mounted between the two guide slots.

6. Plug connector according to claim 5, the connector housing (2) of which in continuation of the guide slots (5) incorporates a ledger (16) on which a retaining catch (17) situated on the socket side is adapted to lock, as well as a release lever (18) which is swivel-mounted on the connector housing (2) in order to disconnect the locked retaining catch, **characterised in that** the compression spring (8) extends for substantially the whole length of the connector housing (2) through the ledger (16) and as far as beneath the release lever (18).

7. Plug connector according to any of claims 1 to 6, **characterised in that** a pin (19) which engages in the compression spring (8) is disposed on the connector housing to act as an abutment for said compression spring.

## Revendications

1. Elément connecteur (1) pour une connexion optique, comprenant une enveloppe de connecteur (2) dans laquelle se trouve au moins une broche (3), et un volet de protection (4) destiné à protéger le côté frontal de la broche, le volet de protection étant monté sur l'enveloppe de connecteur (2), au niveau d'une glissière (5) à peu près linéaire, pour pouvoir pivoter et coulisser de telle sorte que lors de l'enfichage de l'élément connecteur dans un élément formant alvéole (6), ledit volet de protection soit apte à passer d'une position fermée, sur le côté frontal (7) de l'enveloppe de connecteur, à une position ouverte rétractée par rapport audit côté frontal, **caractérisé en ce qu'**il est prévu sur l'enveloppe de connecteur (2) un ressort de compression (8) qui est à peu près parallèle à la glissière (5), qui contraint directement ou indirectement le volet de protection (4) entre la position fermée et la position ouverte, au-dessus du plan de la glissière (5), et qui contraint ledit volet de protection dans la position fermée.

2. Elément connecteur selon la revendication 1, **caractérisé en ce que** le ressort de compression (8) est monté sur l'enveloppe de connecteur (2) dans une rainure (9) et/ou dans un conduit creux (10), et **en ce que** le ressort de compression (8) agit sur le volet de protection (4) par l'intermédiaire d'un poussoir (11) guidé dans la rainure et/ou dans le conduit creux.

3. Elément connecteur selon la revendication 2, **caractérisé en ce que** le volet de protection (4) comporte un bras de levier (12) dont l'extrémité libre coopère avec un côté frontal (13) du poussoir (11) au-dessus du plan de la glissière, dans n'importe quelle position dudit volet.

4. Elément connecteur selon la revendication 2 ou 3, **caractérisé en ce que** le poussoir (11) est conçu comme un étrier à peu près en U et **en ce que** le ressort de compression (8) est monté entre les branches (14, 14') de l'étrier.

5. Elément connecteur selon l'une des revendications 1 à 4, avec lequel le couvercle de protection (4) comporte deux saillies latérales formant charnières (15) qui viennent en prise dans deux rainures de guidage parallèles (5) de l'enveloppe de connecteur (2), **caractérisé en ce que** le ressort de compression (8) est monté entre les deux rainures de guidage.

6. Elément connecteur selon la revendication 5, dont l'enveloppe (2) comporte, à la suite des rainures de guidage (5), une barrette d'arrêt (16) au niveau de laquelle un élément d'arrêt (17) situé côté alvéole peut venir s'encliqueter, ainsi qu'un levier de déverrouillage (18) qui est monté pivotant sur l'enveloppe de connecteur (2) et qui est destiné à débloquer l'élément d'arrêt encliqueté, **caractérisé en ce que** le ressort de compression (8) s'étend sensiblement sur toute la longueur de l'enveloppe de connecteur (2), à travers la barrette d'arrêt (16), jusque sous le levier de déverrouillage (18).

7. Elément connecteur selon l'une des revendications 1 à 6, **caractérisé en ce qu'**il est prévu sur l'enveloppe de connecteur, comme butée pour le ressort de compression (8), une tige (19) qui pénètre dans celui-ci.
